(19) Europäisches Patentamt
European Patent Office
Office européen des brevets

(11) EP 2 082 555 B1

(12) EUROPEAN PATENT SPECIFICATION

(45) Date of publication and mention
of the grant of the patent:
**17.08.2016 Bulletin 2016/33**

(51) Int Cl.:
**H04L 29/06** *(2006.01)*

(21) Application number: **07843575.7**

(22) Date of filing: **29.09.2007**

(86) International application number:
**PCT/US2007/080023**

(87) International publication number:
**WO 2008/042824 (10.04.2008 Gazette 2008/15)**

(54) **INTELLIGENCE NETWORK ANOMALY DETECTION USING A TYPE II FUZZY NEURAL NETWORK**

INTELLIGENTE ERKENNUNG ABNORMALEN NETZWERK-VERHALTENS UNTER VERWENDUNG EINES TYPE-II FUZZY-NEURONALEN NETZES

DÉTECTION D'ANOMALIE SUR UN RÉSEAU D'INTELLIGENCE À L'AIDE D'UN RÉSEAU NEURONAL FLOU DE TYPE II

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 US 536842**

(43) Date of publication of application:
**29.07.2009 Bulletin 2009/31**

(73) Proprietor: **ALCATEL LUCENT**
**92100 Boulogne-Billancourt (FR)**

(72) Inventors:
• **YEH, Chiang**
**Sierra Madre, CA 91024 (US)**
• **TOUVE, Jeremy**
**Valencia, CA 91355 (US)**
• **SANGRONIZ, R., Leon**
**Sandy, UT 84093 (US)**

(74) Representative: **Wetzel, Emmanuelle et al**
**Alcatel-Lucent**
**Intellectual Property Business Group**
**70430 Stuttgart (DE)**

(56) References cited:
**US-A1- 2004 250 124     US-A1- 2005 125 195**

• **JI-YAO AN ET AL: "Intrusion detection based on fuzzy neural networks" ADVANCES IN NEURAL NETWORKS-ISNN 2006. PROCEEDINGS OF THE THIRD INTERNATIONAL SYMPOSIUM ON NEURAL NETWORKS, 28 MAY-1 JUNE 2006 CHENGDU, CHINA (LECTURE NOTES IN COMPUTER SCIENCE VOL.3973) SPRINGER-VERLAG BERLIN, GERMANY, June 2006 (2006-06), pages 231-239, XP019033999 ISBN: 3-540-34482-9**
• **SUI SONG ET AL: "A Control Theoretical Approach for Flow Control to Mitigate Bandwidth Attacks" 2006 IEEE INFORMATION ASSURANCE WORKSHOP WEST POINT, NY JUNE 21-23, PISCATAWAY, NJ, USA,IEEE, June 2006 (2006-06), pages 348-360, XP010926021 ISBN: 1-4244-0130-5**
• **CHING-HUNG LEE ET AL: "Systems identification using type-2 fuzzy neural network (type-2 fnn) systems" PROCEEDINGS OF THE IEEE INTERNATIONAL SYMPOSIUM ON COMPUTATIONAL INTELLIGENCE IN ROBOTICS AND AUTOMATION, JULY 16 - 20, 2003, PISCATAWAY, NJ, USA,IEEE, vol. 3, July 2003 (2003-07), pages 1264-1269, XP010650346 ISBN: 0-7803-7866-0**

**Description**

## TECHNICAL FIELD

The present invention relates to an anomaly detector and a method for using a type II fuzzy neural network to identify symptoms of an attack/anomaly (which is directed at a private network) and to suggest escalating corrective actions (which can be implemented by a network device) until the symptoms of the attack/anomaly begin to disappear.

## BACKGROUND

Current networking devices (e.g., layer 3 Ethernet switch) often use either post mortem technique or preventative measures technique to detect and correct network anomalies/attacks. In the former case, the networking device collects an extensive amount of network statistics and then sends this information to an external facility to identify known patterns or signatures of organized attack/anomalies or undesirable network activities. Since, the requirements of collating, accounting, and analyzing these network statistics demands an exhaustive amount of number crunching and searching capabilities, this external facility identifies the anomaly/attack after it has already damaged the network.

In the latter case, the networking device is programmed with a set of filter masks, decision trees, or complicated heuristics that corresponds to known patterns or signatures of organized attacks/anomalies or undesirable network activities. These mechanisms only recognize the attacks/anomalies by using hard and fast rules which are fairly efficient at tracking fixed and organized patterns of attacks/anomalies. Once identified, the networking device takes appropriate steps to address the symptoms of the offending attacks/anomalies. This particular technique works well if the attack/anomaly has a rigid range of behaviors and leaves a well known signature.

Some networking devices use a combination of the post mortem technique and the preventative measures technique to detect and correct network anomalies/attacks. Since, the most damaging and recognizable attack methods, e.g., denial of service, port scanning, etc., have very distinct signatures, this type of networking device is able to successfully identify and correct many of these attacks/anomalies. For instance, a network administrator can easily program a set of filter masks, decision trees, or complicated heuristics to detect and correct the problems cause by an attack/anomaly which exhibits a rigid range of behaviors and leaves a well known signature. However, the newer types of attacks/anomalies which are commonly used today do not behave in a predictable manner or leave a distinct signature. For example, there is a new generation of worms which have a range of activities that are not easily identifiable when they migrate across a network, because these newer worms use biological algorithms which cause them to transmute their behaviors as they migrate and reproduce within a network.

As a result, these well known techniques may not perform very well because they depend on intimate knowledge about the cause of the attack/anomaly before they can recognize the attack/anomaly and take corrective actions to correct the symptoms of the attack/anomaly. Plus, these techniques often need to take a discrete course of corrective actions regardless of the degree of the attack/anomaly (unless the network administrator specifically defines each degree of the attack that they wish to address, which, in essence, renders each degree of the attack as a new class of attack). Accordingly, there is a need for a new technique which can detect an attack/anomaly (especially one of the newer types of transmutable worms) and suggest escalating actions until the symptoms of the attack/anomaly begin to disappear. This need and other needs are addressed by the anomaly detector and the anomaly detection method of the present invention.

US Patent Application Publication No. 2004/0250124 A1 discloses a method for protecting a network from an attack that includes measuring a property of traffic entering the network, and analyzing the property using at least one fuzzy logic algorithm in order to detect the attack.

## BRIEF DESCRIPTION OF THE INVENTION

An anomaly detector and a method are recited in independent Claims 1 and 7, respectively. The present invention includes an anomaly detector and a method for using a type II fuzzy neural network that can track symptoms of an attack and suggest escalating corrective actions until the symptoms of the attack begin to disappear. In one embodiment, the anomaly detector uses a three-tiered type II fuzzy neural network where the first tier has multiple membership functions $\mu_1$-$\mu_i$ that collect statistics about different aspects of the "health" of a network device and processes those numbers into metrics which have values between 0 and 1. The second tier has multiple summers $\Pi_1$-$\Pi_m$ each of which interfaces with selected membership functions $\mu_1$-$\mu_i$ to obtain their metrics and then outputs a running sum (probabilistic, not numerical). The third tier 206 has multiple aggregators $\Sigma_1$-$\Sigma_k$ each of which aggregates the sums from selected summers $\Pi_1$-$\Pi_m$ and computes a running average that is compared to fuzzy logic control rules (located within an if-then-else table) to determine a particular course of action which the network device can follow to address the symptoms of an attack.

**BRIEF DESCRIPTION OF THE DRAWINGS**

A more complete understanding of the present invention may be obtained by reference to the following detailed description when taken in conjunction with the accompanying drawings wherein:

FIGURE 1 is a diagram of a network device which interacts with an anomaly detector that functions to protect a private network in accordance with the present invention;
FIGURE 2 is a diagram of the anomaly detector that uses a three-tiered type II fuzzy neural network to protect the private network in accordance with one embodiment of the present invention; and
FIGURE 3 is a diagram illustrating the basic steps that can be performed by the anomaly detector which uses the three-tiered type II fuzzy neural network in order to protect the private network in accordance with one embodiment of the present invention.

**DETAILED DESCRIPTION OF THE DRAWINGS**

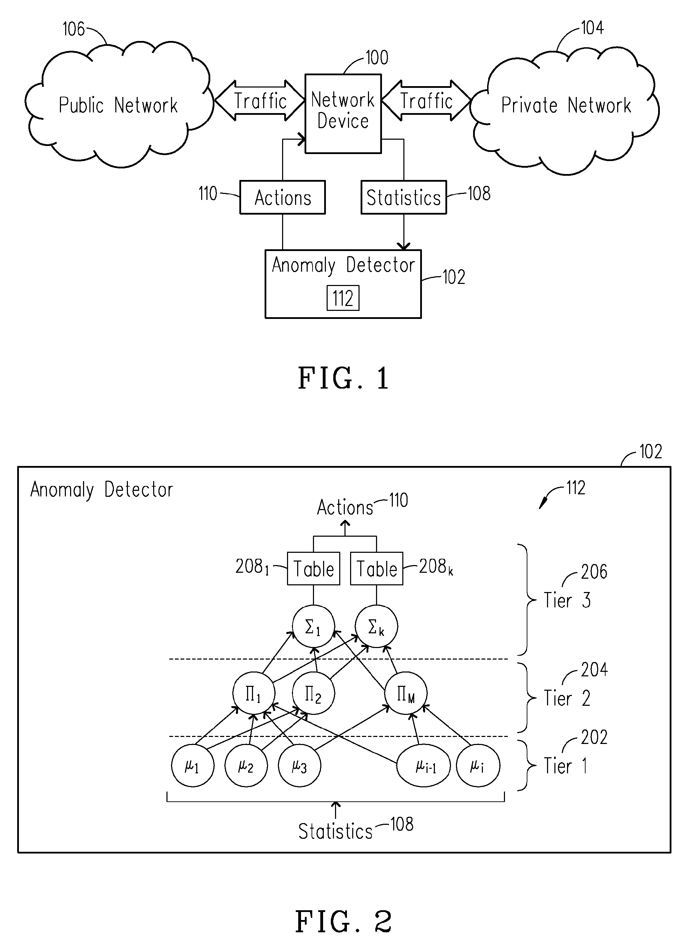

Referring to FIGURE 1, there is shown a diagram which is used to help explain how a network device 100 can interface with an anomaly detector 102 that identifies symptoms of an attack and suggests escalating corrective actions which the network device 100 can then follow to address the symptoms of the attack in accordance with the present invention. In this exemplary scenario, the network device 100 by interfacing with the anomaly detector 102 (which can also be located within the network device 100) can protect a private network 104 from attacks and possible threats originating from a public network 106. Plus, the network device 100 by interfacing with the anomaly detector 102 can protect the private network 104 from attacks and potential abuses from its own users. A detailed discussion is provided next to explain how the anomaly detector 102 receives network statistics 108, process those network statistics 108 and then outputs corrective action(s) 110 which can be implemented by the network device 100 to protect the private network 104.

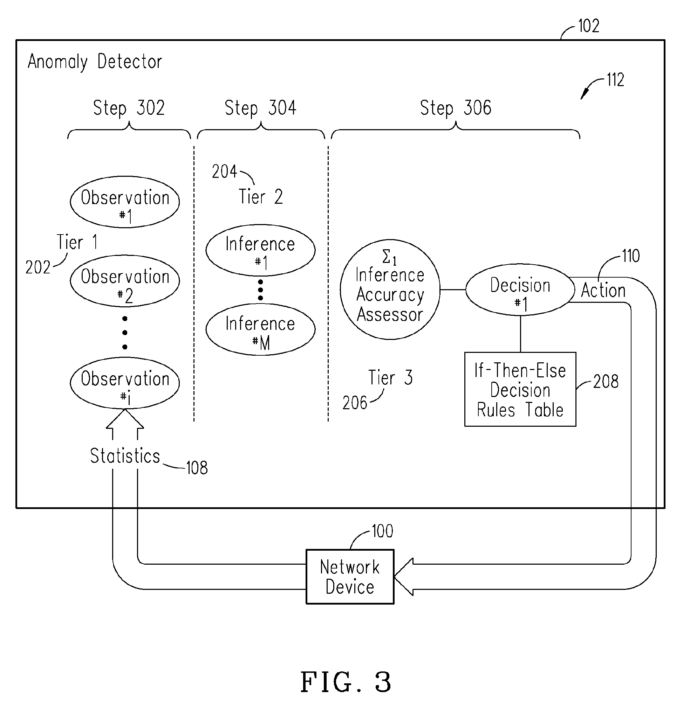

The anomaly detector 102 uses artificial intelligence to introduce a measure of adaptability in the anomaly detection process which is desirable because the nature of the newer network attacks (e.g., transmutable worms) is often convoluted, and more often, unknowable. In one embodiment, the anomaly detector 102 enables this measure of adaptability by using a form of artificial intelligence referred to herein as a type II fuzzy neural network 112 (see FIGURES 2 and 3). The type II fuzzy neural network 112 is able to use partial knowledge taken from the collected network statistics 108 to identify and track the symptoms of an attack before it suggests escalating corrective actions 110 to address the symptoms of the attack. Thus, the type II fuzzy neural network 112 does not need to deduce the root cause of an attack before it can detect an attack and suggest the corrective actions 110 needed to address the symptoms of the attack.

The type II fuzzy neural network 112 is different from a traditional neural network in that its conditions for learning are based on simple heuristics rather than complicated adaptive filters. These simple heuristics allow for undefined numerical errors in adaptation termed "fuzziness". It is this "fuzzy" nature which allows the anomaly detector 102 to track an elusive problem by discovering a general trend without needing to have the precision of data that is required by a traditional neural network which uses complicated adaptive filters. An exemplary embodiment of a type II fuzzy neural network 112 which has a three-tiered control structure is discussed next with respect to FIGURES 2 and 3.

Referring to FIGURE 2, there is shown a diagram of an exemplary three-tiered type II fuzzy neural network 112 which is used by the anomaly detector 102 to identify symptoms of an attack and to suggest escalating corrective actions which can be implemented until the symptoms of the attack begin to disappear in accordance with the present invention. As shown, the first tier 202 has multiple membership functions $\mu_1$-$\mu_i$ that collect statistics 108 about different aspects of the "health" of the network device 100 and process those numbers into metrics which have values that are between 0 and 1. The second tier 204 has multiple summers $\Pi_1$-$\Pi_m$ each of which interfaces with selected membership functions $\mu_1$-$\mu_i$ to obtain their metrics and then process/output a running sum (probabilistic, not numerical). The third tier 206 has multiple aggregators $\Sigma_1$-$\Sigma_k$ each of which aggregates the sums from selected summers $\Pi_1$-$\Pi_m$ and computes a running average which is compared to fuzzy logic control rules located within a corresponding if-then-else table $208_1$ and $208_k$ to determine a course of action 110 which the network device 100 can then follow to address the symptoms of an attack. In particular, the third tier 206 has multiple if-then-else tables $208_1$ and $208_k$ each of which receives a running average from a respective aggregator $\Sigma_1$-$\Sigma_k$ and based on that input performs an if-then-else analysis and then outputs the action 110 which the network device 100 can then implement to address the symptoms of an attack.

In one particular application, each membership function $\mu_1$-$\mu_i$ collects statistics 108 about a specific aspect of the network device 100 and then produces a single metric to represent the "health" of that particular aspect of the network device 100. This metric has a score between 0 and 1 which means that the corresponding membership function can be represented as $\mu \, \varepsilon \, \{0..1\}$. The metric score is a fraction of a network statistic that the network device 100 is currently collecting, e.g. the number of packets across a particular interface, the number of bits across a particular interface, the number of http connections across a particular interface, etc..., against a theoretical maximum. For example: $\mu_1 =$

throughput of port A = (number of bits transmitted by port A/second)/(link speed per second of port A). Thus, a higher score of a metric is more desirable than a lower score because the former is indicative of a superior state of health. As can be appreciated, there is no limit as to what type of aspect (statistic associated with the network device 100) a membership function can convey in its value of $\mu$. Plus, the more precise that a network administrator defines the membership functions $\mu_1$-$\mu_i$ then the better the overall anomaly detector 102 is going to behave.

In the second tier 204, the metrics from selected membership functions $\mu_1$-$\mu_i$ are summed by one of the summers $\Pi_1$-$\Pi_m$ to produce an overall score $\mu_{overall}$. Because, certain individual membership functions $\mu_1$-$\mu_i$ can influence the overall score in different ways. The summers $\Pi_1$-$\Pi_m$ can model one or more of the individual membership functions $\mu_1$-$\mu_i$ with varying weights "w" so they have a desired compensatory effect on the overall score $\mu_{overall}$. In one example, this overall score $\mu_{overall}$ can be calculated as follows (equation no. 1):

$$\mu_{overall} = (\prod (\mu_i^{w(i)} * \mu'_i{}^{w(i)}))^\beta * (1 - \prod ((1 - \mu_i)^{w(i)} * (1 - \mu'_i)^{w(i)}))^\gamma$$

where $\beta = \gamma - 1$, $\mu_i \; \varepsilon \; \{0..1\}$, w(i) = ith weight for $\mu_i$

The above equation happens to be a weighted, geometric mean of $\mu_i$ and $\mu'_i$, where $u_i$ is the ith factor affecting overall score $\mu_{overall}$, and $\mu'_i$ is the rate of change of $\mu_i$, i.e. $\mu'_i = d\mu_i/dt$

In the third tier 206, selected ones of the weighted geometric means (overall scores $\mu_{overall}$) are summed by one of the aggregators $\Sigma_1$-$\Sigma_k$ and the result is compared against a corresponding table $208_1$ and $208_k$ of if-then-else actions. As shown, each aggregator $\Sigma_1$-$\Sigma_k$ has only one table association and each table $208_1$ and $208_k$ can been programmed to look for a specific attack/anomaly and to address the symptoms of that specific attack/anomaly. The following is an illustration of a sample table $208_1$ and $208_k$:

TABLE 1

| If Sum$_1$ > Th1 | ... | & if Sum$_m$ > Th4 | Then take action1 | Else do nothing |
|---|---|---|---|---|
| I f (Sum$_1$ < Th1 & Sum$_1$ > Th2) | ... | & if (Sum$_m$ < Th4 & Sum$_m$ > Th5) | Then take action2 | Else do nothing |
| ... | ... | ... | Then take action3 | Else take action4 |
| If Sum$_1$ < Th3 | ... | & if (Sum$_m$ < Th6) | Then take action5 | Else take action6 |
| Note: The table $208_1$ and $208_k$ may also contain multiple actions, e.g. if (aggregator 1 > threshold 1) then do (action 1 and action 2 and action 3) else do (action 4 and action 5). | | | | |

The actions 110 illustrated above are the steps which the networking device 100 can take to protect itself from an attack/anomaly. For example, the anomaly detector 102 may have detected potential network congestion on a particular interface in the network device 100 based on the current traffic pattern, i.e. when it's aggregator $\Sigma_1$ for congestion exceeds a particular threshold. If this aggregator's sum is in between a severe threshold and a mild threshold, then the action 110 triggered by the aggregator $\Sigma_1$ may be to have the networking device 100 mark all subsequent traffic with a low Differentiated Services Code Point (DSCP) priority. If the aggregator's sum exceeds the severe threshold, then the action 110 triggered by the aggregator $\Sigma_1$ may be to have the networking device 100 drop all of the subsequent traffic on the interface under congestion.

In another example, the networking device 100 may witness a suspiciously large number of HyperText Transfer Protocol (HTTP) requests, followed by large number of HTTP aborts from a small number of Internet Protocol (IP) addresses, in a predictive pattern and fixed interval. The anomaly detector 102 could track this pattern by aggregating both of these variables and then address this problem by outputting an action 110 which can be implemented by the networking device 100. In this example, it is assumed that the network operator has a-priori knowledge about this particular anomaly, thus they can properly configured the membership functions $\mu_1$-$\mu_n$ (and also weight the membership functions $\mu_1$-$\mu_n$), the summers $\Pi_1$-$\Pi_m$, the aggregators $\Sigma_1$-$\Sigma_k$ and/or the if-then-else tables $208_1$ and $208_k$. Alternatively, the anomaly detector 102 could also be used to detect and address unexpected attacks/anomalies (this particular capability is discussed in more detail below).

As a sample embodiment, one can implement the three-tiered type II fuzzy neural network 112 on a piece of networking equipment 100, e.g., a layer 3 Ethernet switch 100, that already maintains a vast array of statistics. In this case, the tier 1 membership functions $\mu_1$-$\mu_i$ would periodically take these statistics and convert them into metrics/fractions which are feed into one or more tier 2 summers $\Pi_1$-$\Pi_m$. For instance, one of the membership functions $\mu_1$ could take the statistic related to the number of bits that passes an interface per second and divide this number against the port speed to produce a metric/fraction between $\{0..1\}$ which would be indicative of the link utilization. In addition, to computing the first metric/fraction ($\mu_1$), the tier 1 membership function $\mu_1$ would also compute the time differential of that metric/frac-

tion ($\mu_1$'). To accomplish this, the membership function $\mu_1$ could for instance calculate the slope of successive $\mu_1(t)$ points, extract an angular value trigonometrically, and divide the angle against 2n.

Thereafter, the tier 2 summers $\Pi_1$-$\Pi_m$ each receive a unique set of metrics/fractions ($\mu_1$-$\mu_i$) and their corresponding time differential metrics/fractions ($\mu_1$'-$\mu_i$') and compute the weighted geometric mean $\mu_{overall}$ based on equation no. 1 (for example). If desired, the summers $\Pi_1$-$\Pi_m$ can weight each of the metrics/fractions ($\mu_1$-$\mu_i$) with a number between 0 and 1. The assigned weight of the metrics/fractions ($\mu_1$-$\mu_i$) indicates the relative importance of the corresponding membership function $\mu_1$-$\mu_i$. For example, if one wants to track network congestion, then link utilization would be weighted with a higher power than the number of open Transmission Control Protocol (TCP) connections. Of course, the type II fuzzy neural network 112 should converge regardless of the weights assigned to the membership functions $\mu_1$-$\mu_i$. However, the type II fuzzy neural network 112 would adapt faster if the membership functions $\mu_1$-$\mu_i$ had properly chosen weights rather than if the membership functions $\mu_1$-$\mu_i$ had ill-chosen weights. Finally, the summers $\Pi_1$-$\Pi_m$ feed their outputs $\mu_{overalls}$ into selected ones of the tier 3 aggregators $\Sigma_1$-$\Sigma_k$ each of which aggregates the received $\mu_{overalls}$ and computes a running average that is compared to fuzzy logic control rules (located in the corresponding if-then-else table $208_1$ and $208_{k)}$ to determine a course of action 110 that the network device 100 can implement to address the symptoms of an attack.

Referring to FIGURE 3, there is a diagram which is used to explain in a different way how the exemplary three-tiered type II fuzzy neural network 112 functions to help protect the private network 104 in accordance with the present invention. In step 302, the first tier entities 202 function to observe system status by collecting statistics and processing them into fractional values that can be manipulated by using fuzzy logic math. In step 304, the second tier entities 204 function to link diverse statistics to draw inferences. In step 306, the third tier entities 206 (only one $\Sigma_1$ and one if-then-else table $208_1$ are shown) function to use a series of the hunches received from selected second tier entities 204 to make a decision about what action 110 the network device 100 can take to protect the private network 104.

An advantage of using a type II fuzzy neural network 112 is that one can train the type II fuzzy neural network 112 to learn about future attacks and network problems. For instance, when a network administrator anticipates a rash of new worm attacks on the public network 106, then they can unleash the suspected worm on an experimental network and use this mechanism to track the pattern of attack. Thereafter, the network administrator can program this newly learned pattern into a live anomaly detector 102 and then the private network 104 would be inoculated to such attacks. The operator can effect the inoculation in two ways: (1) they can modify the rule tables $208_1$-$208_k$ with actions that can shut down the impending attack; and/or (2) they can alter how the second tier 204 evaluates the observation(s) by updating the membership function(s) $\mu_1$-$\mu_n$ (e.g., the weighting of an observation) or by adding new membership function(s).

In another example, if a network administrator wants to train the type II fuzzy neural network 112 to look for a new attack/anomaly, they could program one of the if-then-else tables $208_1$ to take no action and then simply observe the outputs from the corresponding aggregator $\Sigma_1$. Then, they can design a specific set of actions which are tailored for that particular new attack/anomaly. In addition, if the type II fuzzy neural network 112 is trained to protect against specific threats, then the training process in itself along with the modifications of the fuzzy parameters can also help protect against never before seen attacks. These unexpected attacks only need to share some of the same elements associated with the known attacks for the fuzzy neural network 112 to decide that they are "bad" and enact a response. These elements can be measured and easily identified (for example they can be the packets per second of a specific traffic type) and the more of them the mechanism is aggregating, then the more varied the types of unexpected attacks which can be identified.

Although one embodiment of the present invention has been illustrated in the accompanying Drawings and described in the foregoing Detailed Description, it should be understood that the present invention is not limited to the embodiment disclosed, but is capable of numerous rearrangements, modifications and substitutions without departing from the invention as set forth and defined by the following claims.

**Claims**

1. An anomaly detector (102) comprising a type II fuzzy neural network having a three-tiered control structure (112) that tracks symptoms of an attack and suggests escalating corrective actions (110) until the symptoms of the attack begin to disappear, wherein the control structure includes:

   a first tier (202) including a plurality of membership functions, where each membership function is adapted to :

      collect a network statistic (108); and
      process the collected statistic into a metric

which is the collected statistic divided by a theoretical maximum
of the collected statistic;
a second tier (204) including a plurality of summers , where each summer is adapted to :

    receive a unique set of metrics associated with the membership functions; and
    calculate an average based on the unique set

of metrics and on a rate of change of each of the metrics in the unique set; and
a third tier (206) including at least one aggregator and at least one table ($208_1$, $208_k$), where each aggregator
is adapted to :

    receive a unique set of the calculated averages; and
    sum the unique set of the calculated averages; and
    wherein each table is used to analyze the summed calculated averages to determine if a course of action
    is needed to address the symptoms of the attack.

2. The anomaly detector of Claim 1, wherein said collected network statistic includes:

    a number of packets across a particular interface on a network device;
    a number of bits across a particular interface on said network device; or
    a number of HTTP connections across a particular interface on said network device.

3. The anomaly detector of Claim 1, wherein said each summer calculates an average that is a weighted geometric calculated average.

4. The anomaly detector of Claim 1, wherein said attack is a transmuting worm which implements a plurality of biological algorithms.

5. The anomaly detector of Claim 1, wherein said attack is an unexpected attack.

6. The anomaly detector of Claim 1, wherein said attack is an expected attack.

7. A method for addressing a symptom of an attack using a type II fuzzy neural network, said method comprising the steps of:

    collecting (302) a plurality of network statistics (108);
    processing (302) each of the collected network statistics into a metric which is a fraction of the collected network statistic
    divided by a theoretical maximum of the collected network statistic;
    calculating (304) a plurality of averages each of which is based on a unique set of the metrics and a rate of change of the unique set of the metrics;
    aggregating (306) a unique set of the calculated averages; and
    comparing (306) the aggregated calculated averages to values in an if-then-else decision rules table to determine an action to address the symptom of the attack.

8. The method of Claim 7, wherein said comparing step further includes revising the if-then-else decision rules table to better address the symptom of the attack after reviewing the collected network statistics, the calculated averages and/or the aggregated calculated averages.

9. The method of Claim 7, wherein said collected network statistics includes:

    a number of packets across a particular interface in said network device;
    a number of bits across a particular interface in said network device; or
    a number of HTTP connections across a particular interface in said network device.

10. The method of Claim 7, wherein said attack is a transmuting worm which implements a plurality of biological algorithms.

**Patentansprüche**

1. Anomaliedetektor (102), umfassend ein Type-II Fuzzy-neuronales Netz mit einer dreistufigen Kontrollstruktur (112), die Symptome eines Angriffes verfolgt und steigende korrektive Maßnahmen (110) vorschlägt, bis die Symptome des Angriffes zu verschwinden beginnen, wobei die Kontrollstruktur Folgendes umfasst:

   eine erste Stufe (202), umfassend eine Vielzahl von Zugehörigkeitsfunktionen, wobei jede Zugehörigkeitsfunktion angepasst ist zum:

   Sammeln einer Netzwerkstatistik (108); und
   Verarbeiten der gesammelten Statistik in eine Metrik, welche die gesammelte Statistik dividiert durch ein theoretisches Maximum der gesammelten Statistik ist;
   eine zweite Stufe (204), umfassend eine Vielzahl von Addierern, wobei jeder Addierer angepasst ist zum:

   Empfangen einer individuellen Reihe von Metriken, die den Zugehörigkeitsfunktionen zugeordnet sind; und
   Berechnen eines Durchschnitts basierend auf der individuellen Reihe von Metriken und auf einer Änderungsrate von jeder der Metriken in der individuellen Reihe; und
   eine dritte Stufe (206), umfassend mindestens einen Aggregator und mindestens eine Tabelle ($208_1$, $208_k$), wobei jeder Aggregator angepasst ist zum:

   Empfangen einer individuellen Reihe der berechneten Durchschnitte; und
   Addieren der individuellen Reihe der berechneten Durchschnitte;
   und wobei jede Tabelle verwendet wird, um die addierten berechneten Durchschnitte zu analysieren, um zu bestimmen, ob eine Vorgehensweise benötigt wird, um auf die Symptome des Angriffes einzugehen.

2. Anomaliedetektor nach Anspruch 1, wobei die besagte gesammelte Netzwerkstatistik Folgendes umfasst:

   eine Anzahl von Paketen über eine bestimmte Schnittstelle an einer Netzwerkvorrichtung;
   eine Anzahl von Bits über eine bestimmte Schnittstelle an der besagten Netzwerkvorrichtung; oder
   eine Anzahl von HTTP-Verbindungen über eine bestimmte Schnittstelle an der besagten Netzwerkvorrichtung.

3. Anomaliedetektor nach Anspruch 1, wobei jeder besagte Addierer einen Durchschnitt berechnet, der ein gewichteter geometrischer berechneter Durchschnitt ist.

4. Anomaliedetektor nach Anspruch 1, wobei besagter Angriff ein sich verwandelnder Wurm ist, der eine Vielzahl von biologischen Algorithmen implementiert.

5. Anomaliedetektor nach Anspruch 1, wobei besagter Angriff ein unerwarteter Angriff ist.

6. Anomaliedetektor nach Anspruch 1, wobei besagter Angriff ein erwarteter Angriff ist.

7. Verfahren zum Eingehen auf ein Symptom eines Angriffes unter Verwendung eines Type-II Fuzzy-neuronalen Netzes, wobei besagtes Verfahren folgende Schritte umfasst:

   Sammeln (302) einer Vielzahl von Netzwerkstatistiken (108);
   Verarbeiten (302) jeder der gesammelten Netzwerkstatistiken in eine Metrik, die ein Bruchteil der gesammelten Netzwerkstatistik ist, dividiert durch ein theoretisches Maximum der gesammelten Netzwerkstatistik;
   Berechnen (304) einer Vielzahl von Durchschnitten, wovon jeder auf einer individuellen Reihe von Metriken und einer Änderungsrate der individuellen Reihe von Metriken basiert;
   Vereinigen (306) einer individuellen Reihe der berechneten Durchschnitte; und
   Vergleichen (306) der vereinigten berechneten Durchschnitte mit Werten in einer Wenn-Dann-Sonst-Entscheidungsregeltabelle, um eine Maßnahme zu bestimmen, um auf das Symptom des Angriffes einzugehen.

8. Verfahren nach Anspruch 7, wobei besagter Vergleichsschritt weiterhin das Revidieren der Wenn-Dann-Sonst-Entscheidungsregeltabelle umfasst, um auf das Symptom des Angriffes nach Überprüfen der gesammelten Netzwerkstatistiken, der berechneten Durchschnitte und/oder der vereinigten berechneten Durchschnitte besser einzugehen.

9. Verfahren nach Anspruch 7, wobei die besagten gesammelten Netzwerkstatistiken Folgendes umfassen:

eine Anzahl von Paketen über eine bestimmte Schnittstelle in besagter Netzwerkvorrichtung;
eine Anzahl von Bits über eine bestimmte Schnittstelle in besagter Netzwerkvorrichtung; oder
eine Anzahl von HTTP-Verbindungen über eine bestimmte Schnittstelle in besagter Netzwerkvorrichtung.

10. Verfahren nach Anspruch 7, wobei besagter Angriff ein sich verwandelnder Wurm ist, der eine Vielzahl von biologischen Algorithmen implementiert.

## Revendications

1. Détecteur d'anomalie (102) comprenant un réseau neuronal flou de type II ayant une structure de commande à trois niveaux (112) qui piste les symptômes d'une attaque et suggère des actions correctives (110) croissantes jusqu'à ce que les symptômes de l'attaque commencent à disparaître, la structure de commande comprenant :

un premier niveau (202) incluant une pluralité de fonctions de membre où chaque fonction de membre est adaptée pour :

collecter une statistique de réseau (108) ; et
traiter la statistique collectée en un indice de mesure qui est la statistique collectée divisée par un maximum théorique de la statistique collectée;
un deuxième niveau (204) incluant une pluralité d'additionneurs où chaque additionneur est adapté pour :

recevoir un ensemble unique d'indices de mesure associés aux fonctions de membre ; et
calculer une moyenne en se basant sur l'ensemble unique d'indices de mesure et sur un taux de variation de chacun des indices de mesure dans l'ensemble unique ; et
un troisième niveau (206) incluant au moins un agrégateur et au moins une table ($208_1$, $208_k$) où l'agrégateur est adapté pour :

recevoir un ensemble unique des moyennes calculées ; et
additionner l'ensemble unique des moyennes calculées ; et
dans lequel chaque table est utilisée pour analyser les moyennes calculées additionnées afin de déterminer si des mesures sont nécessaires pour aborder les symptômes de l'attaque.

2. Détecteur d'anomalie selon la revendication 1, dans lequel ladite statistique de réseau collectée comprend :

un nombre de paquets à travers une interface particulière sur un périphérique de réseau ;
un nombre de bits à travers une interface particulière sur ledit périphérique de réseau ; ou
un nombre de connexions HTTP à travers une interface particulière sur ledit périphérique de réseau.

3. Détecteur d'anomalie selon la revendication 1, dans lequel chaque additionneur calcule une moyenne qui est une moyenne calculée géométrique pondérée.

4. Détecteur d'anomalie selon la revendication 1, dans lequel ladite attaque est un ver à transmutation qui met en oeuvre une pluralité d'algorithmes biologiques.

5. Détecteur d'anomalie selon la revendication 1, dans lequel ladite attaque est une attaque inattendue.

6. Détecteur d'anomalie selon la revendication 1, dans lequel ladite attaque est une attaque attendue.

7. Procédé de traitement d'un symptôme d'une attaque en utilisant un réseau neuronal flou de type II, ledit procédé comprenant les étapes suivantes :

collecter (302) une pluralité de statistiques de réseau (108) ;
traiter (302) chacune des statistiques de réseau collectées en un indice de mesure qui est une fraction de la statistique de réseau collectée divisée par un maximum théorique de la statistique de réseau collectée ; calculer (304) une pluralité de moyennes dont chacune est basée sur un ensemble unique des indices de mesure et un taux de variation de l'ensemble unique d'indices de mesure ; grouper (306) un ensemble unique des moyennes calculées ; et comparer (306) les moyennes calculées groupées à des valeurs dans une table de règles de décision si alors sinon afin de déterminer une action pour aborder le symptôme de l'attaque.

8. Procédé de traitement selon la revendication 7, selon lequel ladite étape consistant à comparer comprend en outre réviser la table de règles de décision si-alors-sinon afin de mieux aborder le symptôme de l'attaque après avoir reçu les statistiques de réseau collectées, les moyennes calculées et/ou les moyennes calculées groupées.

9. Procédé de traitement selon la revendication 7, selon lequel lesdites statistiques de réseau collectées comprennent :

un nombre de paquets à travers une interface particulière dans ledit périphérique de réseau ; un nombre de bits à travers une interface particulière dans ledit périphérique de réseau ; ou un nombre de connexions HTTP à travers une interface particulière dans ledit périphérique de réseau.

10. Procédé de traitement selon la revendication 7, selon lequel ladite attaque est un ver à transmutation qui met en oeuvre une pluralité d'algorithmes biologiques.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040250124 A1